# EUROPÄISCHE PATENTSCHRIFT

(11) **EP 1 271 027 B1**
(45) Veröffentlichungstag und Bekanntmachung des Hinweises auf die Patenterteilung: **23.04.2008**
(21) Anmeldenummer: 02012814.6
(22) Anmeldetag: 10.06.2002
(51) Int. Cl.: F16K 17/10, F15B 13/00

(54) **Ventilanordnung**
Valve device
Dispositif de soupape

(30) Priorität: 12.12.2001 DE 10161121; 20.06.2001 DE 10129396
(43) Veröffentlichungstag der Anmeldung: 02.01.2003
(73) Patentinhaber: AREVA NP GmbH, 91052 Erlangen (DE)
(72) Erfinder: Werres, Lothar, Dipl.-Ing. (FH), 91094 Langensendelbach (DE); Drossel, Rolf, Dipl.-Ing., 91058 Erlangen (DE); Conrads, Hermann-Josef, Dipl.-Ing. (FH), 91074 Herzogenaurach (DE)
(74) Vertreter: Tergau & Pohl Patentanwälte

(56) Entgegenhaltungen:
- WO-A-87/05134
- DE-C1- 19 628 610
- US-A- 5 842 501
- US-B1- 6 186 600

## Beschreibung

Die Erfindung betrifft eine Ventilanordnung mit einem Absperrblock, an dem ein Sicherheitsventil und ein mit diesem über eine Anzahl von im Absperrblock geführten Medienleitungen kommunizierendes Steuerventil angeordnet sind.

Druckführende Komponenten oder Aggregate technischer Anlagen, wie beispielsweise der Druckbehälter einer kerntechnischen Anlage, sind üblicherweise durch Sicherheitsventile gegen das Auftreten auslegungsüberschreitender Überdrücke in ihrem Innenraum abgesichert. Dazu ist beispielsweise dem Druckbehälter einer kerntechnischen Anlage üblicherweise eine Anzahl von Sicherheitsventilen zugeordnet, die bei Überschreiten eines vorgebbaren Grenzdrucks im Druckbehälter einen Abblaseweg freigeben. Über den Abblaseweg erfolgt im Bedarfsfall eine Entspannung des Druckbehälters bis zu einem Druckniveau unterhalb eines als zulässig erachteten Grenzdrucks. Gerade beim Einsatz derartiger Sicherheitsventile in kerntechnischen Anlagen ist aufgrund der dort herrschenden Anforderungen an betriebliche Sicherheit und Sorgfalt die Einhaltung vergleichsweise strenger Vorschriften hinsichtlich Zuverlässigkeit und Reproduzierbarkeit des Schließverhaltens auch der Sicherheitsventile erforderlich.

Zur zuverlässigen Einhaltung auch vergleichsweise strenger Vorgaben kann ein derartiges Sicherheitsventil mit einem Steuerventil gekoppelt sein, das seinerseits wiederum ein Hauptsteuermodul und ein Vorsteuermodul umfassen kann. Durch eine geeignete Verschaltung dieser Module oder Komponenten kann sichergestellt werden, daß das Sicherheitsventil hinsichtlich seiner Schaltcharakteristik und seiner Schaltschwellen im Hinblick auf den vorgesehenen Anwendungszweck vorgebbare Bedingungen erfüllt.

Aus der DE 196 28 610 C1 ist eine Ventilanordnung bekannt, die insbesondere für den Einsatz in einem Kernkraftwerk geeignet ist. Diese Ventilanordnung umfaßt ein Sicherheitsventil sowie eine ein Vor- und ein Hauptsteuermodul aufweisende Steuereinheit, auch als Steuerventil bezeichnet. Sowohl das Sicherheitsventil als auch das Steuerventil der bekannten Ventilanordnung sind nach dem sogenannten Entlastungsprinzip ausgestaltet, wobei der geschlossene Zustand des Sicherheitsventils und auch des Steuerventils durch eine geeignete Beaufschlagung mit hohem Druck aus einem druckführenden System aufrecht erhalten wird. Falls bei dieser Ventilanordnung der Anpreßdruck des Steuerventils überschritten wird, so erfolgt über einen Druck-Weg-Umformer die Öffnung eines Abblasesystems im Steuerventil, was zu einer Entlastung eines Steuerraums des Steuerventils führt. Infolge dieser Entlastung weicht ein Ventilkegel des Steuerventils aus seinem Ventilsitz und gibt dabei eine mit einem Steuerraum des eigentlichen Sicherheitsventils verbundene Entlastungsleitung frei. Über diese wird anschließend der Steuerraum des eigentlichen Sicherheitsventils entlastet. Aufgrund dieser Entlastung wird der Ventilkegel des Sicherheitsventils aus seinem Ventilsitz bewegt und gibt damit eine mit dem abzusichernden Druckgefäß verbundene Ablaßleitung frei.

Eine derartige Ventilanordnung kann einen sogenannten Absperrblock umfassen, an dem das Sicherheitsventil und das Steuerventil montiert sind. In diesem Absperrblock sind üblicherweise die Medienleitungen geführt, über die das Sicherheitsventil mit dem Steuerventil kommuniziert. Diese Medienleitungen umfassen dabei die genannten Entlastungsleitungen, über die die Steuerräume des Steuerventils und des Sicherheitsventils druckentlastet werden, sowie Impulsleitungen zur Weiterleitung des Druckes aus dem abzusichernden Druckgefäß und/oder Auffüllleitungen, über die die Steuerräume nach erfolgter Betätigung des jeweiligen Ventils wieder mit druckführendem Medium beaufschlagbar sind.

Derartige Ventilanordnungen zählen üblicherweise zu den sicherheitsrelevanten Bauteilen in einer kerntechnischen Anlage. Aus diesem Grund und wegen der beim Einsatz in einer kerntechnischen Anlage zu beachtenden strengen Sicherheitsvorkehrungen werden derartige Ventilanordnungen bei einem Einsatz in einer kerntechnischen Anlage üblicherweise vielfältigen Funktionsprüfungen unterzogen. Dabei ist üblicherweise nach dem Einbau einer derartigen Ventilanordnung zunächst eine sogenannte Einstellprüfung vorgesehen, bei der die Grundeinstellungen der jeweiligen Ventilanordnung wie beispielsweise der Ansprechdruck, Federkräfte oder Federwege im Hinblick auf die existierenden Vorgaben oder im Hinblick auf die speziellen Anforderungen jeweiligen Anlage feinjustiert werden. Darüber hinaus können Funktionsprüfungen sämtlicher individuellen Komponenten der Ventilanordnung sowie wiederkehrende Prüfungen der Ventilanordnung im Hinblick auf Einzelsituationen vorgesehen sein. Die Einstellprüfung ist dabei die Hauptprüfung der jeweiligen Ventilanordnung, die bei deren Einbau vorgenommen wird.

In bestehenden Kernkraftwerksanlagen ist üblicherweise im Zyklus von etwa einem Jahr der Austausch von Brennelementen vorgesehen. Aufgrund von Erfahrungen, daß die zur Absicherung des Druckbehälters verwendeten Ventilanordnungen in etwa diesem Zeitraum auch zur Leckagebildung neigen, ist üblicherweise gemeinsam mit dem Austausch von Brennelementen, der ohnehin einen vorübergehenden Stillstand des jeweiligen Kernkraftwerks bedingt, ein paralleler standardmäßiger Austausch von Ventilanordnungen vorgesehen. Die dabei neu installierten Ventilanordnungen werden üblicherweise vor oder bei ihrer Inbetriebnahme den genannten Funktionsprüfungen, insbesondere der Einstellprüfung, unterzogen.

Bei der Entwicklung neuerer und hochkomplexer Ventilanordnungen ist es jedoch gelungen, deren insgesamt verfügbare Einsatzdauer und insbesondere den Zeitraum bis zum Auftreten möglicher Leckagen deutlich auch über den bisher veranschlagten Einsatzzeitraum von etwa einem Jahr hinaus zu steigern. Daher ist nunmehr der Einsatz derartiger Ventilanordnungen auch über mehrere Brennelement-Zyklen hinweg denkbar. Um hierbei jedoch möglicherweise sicherheitsrelevante Fehlfunktionen der Ventilanordnung sicher auszuschließen, ist auch in diesem Fall bei jedem Brennelement-Wechsel in einer Kernkraftwerksanlage eine vollständige Funktionsüberprüfung der Ventilanordnungen vorgesehen, selbst wenn diese nicht unmittelbar auszutauschen sind. Derartige Prüfungen erfolgen üblicherweise mittels eines dafür vorgesehenen Prüfgeräts, mit dem einzelne Komponenten der Ventilanordnung im an sich drucklosen Zustand des abzusichernden Druckbehälters gezielt mit einem Prüfdruck beaufschlagt werden. Derartige Prüfungen sind insbesondere aufgrund einer Vielzahl dazu vorzunehmender Verschaltungsänderungen und im Hinblick auf die Handhabung zahlreicher dafür benötigter Komponenten vergleichsweise aufwendig.

Der Erfindung liegt daher die Aufgabe zugrunde, eine Ventilanordnung der oben genannten Art anzugeben, bei der der Handhabungs- oder Bedienungsaufwand für die Durchführung der genannten Funktionsprüfungen besonders gering gehalten ist.

Diese Aufgabe wird erfindungsgemäß gelöst, indem der Absperrblock einen Hauptblock und einen mit diesem lösbar verbundenen Adapterblock umfaßt, der eine Anzahl von die medienseitige Verschaltung der Medienleitungen bestimmenden Steuerkanälen aufweist.

Die Erfindung geht dabei von der Überlegung aus, daß der Aufwand bei der Prüfung der Ventilanordnung besonders gering gehalten werden kann, indem diese in eingebautem Zustand und mit nur geringfügigen Handgriffen von ihrer Betriebskonfiguration in ihre Prüfkonfiguration und umgekehrt umgeschaltet werden kann. Die Betriebskonfiguration und die Prüfkonfiguration unterscheiden sich jedoch üblicherweise lediglich in der Art der Verschaltung der das Steuerventil und das Sicherheitsventil miteinander und mit ihrer Außenwelt verbindenden Medienleitungen. Eine geeignete Umschaltung zwischen Betriebskonfiguration und Prüfkonfiguration ist daher erreichbar, indem auf besonders einfache Weise die Verschaltung der Medienleitungen veränderbar gehalten ist. Dazu ist der Absperrblock in einen Hauptblock und in einen Adapterblock unterteilt, wobei der Hauptblock sowohl zur Befestigung von Steuerventil und Sicherheitsventil dient als auch die wesentlichen Teile der Medienleitungen führt. Im Adapterblock sind hingegen Steuerkanäle derart geführt, daß durch geeignete Kombination mit den im Hauptblock vorgesehenen Medienleitungen die jeweils gewünschte Verschaltung entsteht.

Um dabei mit besonders geringem Aufwand und auf besonders einfache Weise eine Vielzahl von Schaltungsvarianten verfügbar zu machen, münden die Medienleitungen in vorteilhafter Ausgestaltung im Hauptblock an nach einem vorgebbaren Standard ermittelten Positionen in die Grenzfläche zum Adapterblock. Somit kann eine Vielzahl von Adapterblöcken, die aufgrund geeigneter Führung der in sie integrierten Steuerkanäle jeweils eine andere Verschaltung der Medienleitungen vorgeben, ohne weiteren Aufwand mit dem Hauptblock kombiniert werden, da diese lediglich der Randbedingung unterliegen, daß an den durch den Standard vorgegebenen Positionen in ihrer Grenzfläche zum Hauptblock die entsprechenden Steuerkanäle enden müssen.

Vorteilhafterweise ist der Hauptblock alternativ mit einem einer Betriebskonfiguration der Medienleitungen entsprechenden Adapterblock oder mit einem einer Prüfkonfiguration der Medienleitungen entsprechenden Adapterblock kombinierbar. Bei einer derartigen Ventilanordnung kann somit durch einfachen Austausch des Adapterblocks ohne weitere Maßnahmen zwischen einer Betriebskonfiguration der Ventilanordnung und einer Prüfkonfiguration der Ventilanordnung umgeschaltet werden.

Vorteilhafterweise ist das Sicherheitsventil der Ventilanordnung nach dem Entlastungsprinzip oder nach dem Belastungsprinzip ausgeführt.

Um auch während des Betriebs der Ventilanordnung in der Art einer online-Erfassung eine andauernde Überprüfung des Druckzustands in einem Steuerraum des oder jeden Ventils zu ermöglichen, kommuniziert in weiterer vorteilhafter Ausgestaltung zumindest eine der im Absperrblock geführten Medienleitungen medienseitig mit einem Drucksensor.

Die mit der Erfindung erzielten Vorteile bestehen insbesondere darin, daß durch die Unterteilung des zwischen das Sicherheitsventil und das Steuerventil geschalteten Absperrblocks in einen Hauptblock und in einen Adapterblock auf besonders einfache Weise eine Umschaltung der Ventilanordnung zwischen verschiedenen Schaltzuständen der Medienleitungen ermöglicht ist. Durch den Hauptblock, an dem das Sicherheitsventil und das Steuerventil montiert sind, können die Medienleitungen dabei in ihrem wesentlichen Verlauf fest vorgegeben sein. Die Anordnung aus Sicherheitsventil, Steuerventil und dem dazwischen geschalteten Hauptblock kann somit auch bei Umschaltung der medienseitigen Verschaltung fest installiert bleiben.

Eine Umschaltung zwischen verschiedenen Schaltzuständen der Ventilanordnung kann dabei durch einfachen Austausch des Adapterblocks erfolgen, wobei die medienseitige Verschaltung der Medienleitungen durch die bedarfsangepaßt im jeweiligen Adapterblock geführten Steuerkanäle erfolgt. Der Adapterblock stellt somit in der Art eines "festverdrahteten Bauteils" sicher, daß durch den Austausch lediglich eines Bauteils eine Umschaltung auch zwischen vergleichsweise komplexen Schaltzuständen ohne weiteres erfolgen kann, wobei insbesondere bei vergleichsweise komplexen medienseitigen Schaltungen Schaltfehler sicher vermieden sind, zumal eine individuelle Leitungsinstallation gerade nicht erforderlich ist. Dadurch ist eine situationsangepaßte Umschaltung zwischen Prüfungskonfiguration und Betriebskonfiguration der Ventilanordnung jederzeit mit nur geringem Aufwand möglich. Somit ist der Aufwand bei der Prüfung einer derartigen Ventilanordnung besonders gering gehalten, wodurch insbesondere die Weiterverwendung einer derartigen Ventilanordnung über mehrere Betriebszyklen hinweg besonders erleichtert ist.

Ein Ausführungsbeispiel der Erfindung wird anhand einer Zeichnung näher erläutert. Darin zeigen:
- Fig. 1: eine Ventilanordnung in einer ersten Schaltungskonfiguration, und
- Fig. 2: die Ventilanordnung nach Fig. 1 in einer zweiten Schaltungsanordnung.

Gleiche Teile sind in beiden Figuren mit den selben Bezugszeichen versehen.

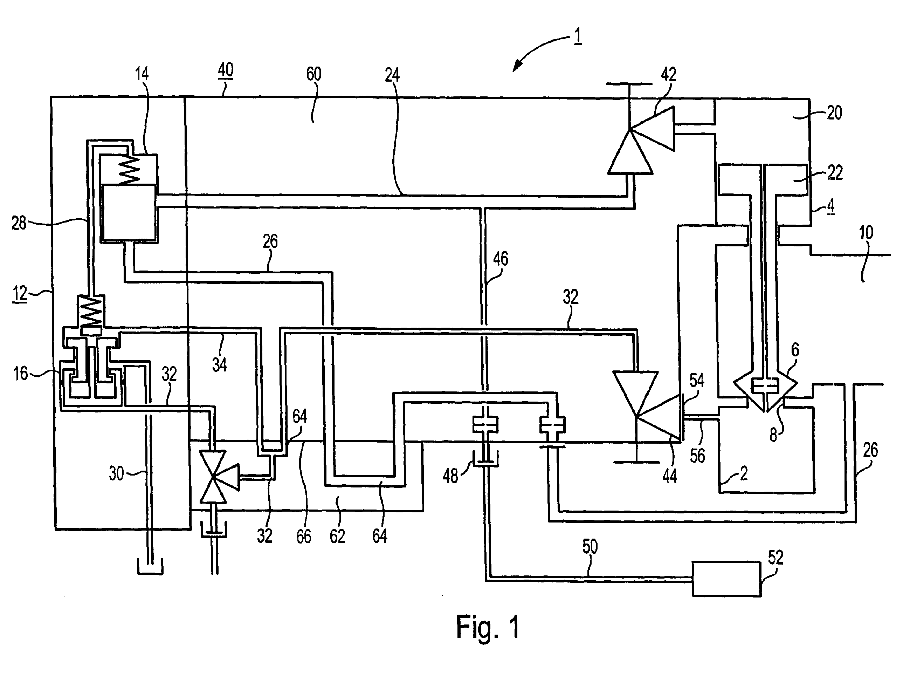

Die Ventilanordnung 1 nach Fig. 1 ist zur Druckabsicherung eines Druckbehälters 2 vorgesehen. Der Druckbehälter 2 kann dabei insbesondere der Druckbehälter einer kerntechnischen Anlage oder einer Kernkraftwerksanlage sein. Die Ventilanordnung 1 umfaßt zur Absicherung des Druckbehälters 2 ein Sicherheitsventil 4. Das Sicherheitsventil 4 umfaßt einen Ventilkegel 6, der im Normalzustand eine Abblaseöffnung 8 des Druckbehälters dicht verschließt. Falls jedoch der Druck im Druckbehälter 2 einen vorgebbaren Sollwert übersteigt, öffnet das Sicherheitsventil 4, wobei der Ventilkegel 6 die Abblaseöffnung 8 freigibt. Dadurch wird der Innenraum des Druckbehälters 2 mit einer Abblaseleitung 10 verbunden, über die bei geöffnetem Sicherheitsventil 4 Gas, Wasser und/oder Dampf aus dem Innenraum des Druckbehälters 2 an eine nachgeschaltete Auffangeinrichtung oder in die Umgebung abgelassen werden kann. Wenn der Druck im Druckbehälter 2 unter den vorgebbaren Sollwert gefallen ist, schließt das Sicherheitsventil 4 hingegen wieder, so daß der Innenraum des Druckbehälters 2 wiederum druckseitig von der Abblaseleitung 10 entkoppelt ist.

Zur Steuerung des Sicherheitsventils 4 in Abhängigkeit vom Druck im Druckbehälter 2 ist dem Sicherheitsventil 4 in der Art einer Steuereinrichtung ein Steuerventil 12 zugeordnet. Das Steuerventil 12 ist seinerseits zweistufig ausgebildet und umfaßt ein Hauptsteuermodul 14 und ein dem vorgeschaltetes Vorsteuermodul 16.

Die Ventilanordnung 1 ist nach dem Entlastungsprinzip ausgeführt. Dazu umfaßt das Sicherheitsventil 4 einen Steuerraum 20, der im normalen Betriebszustand mit einem Arbeitsdruck beaufschlagt ist. Durch diesen Arbeitsdruck wird mittels eines im Steuerraum 20 geführten Kolbens 22 der Ventilkegel 6 sicher in seinen die Abblaseöffnung 8 des Druckbehälters 2 verschließenden Ventilsitz gehalten. Im Auslösefall erfolgt eine Entlastung oder ein Druckabbau im Steuerraum 20, so daß der im Druckbehälter 2 herrschende Druck den Ventilkegel 6 aus seinem Sitz bewegt und somit die Entlastungsöffnung freigibt.

Die bedarfsgerechte Entlastung des Steuerraums 20 zur gezielten Ansteuerung des Sicherheitsventils 4 erfolgt über eine erste Medienleitung 24, über die der Steuerraum 20 mit dem Hauptsteuermodul 14 verbunden ist. Im Ansprechfall öffnet das Hauptsteuermodul 14 eine Verbindung der ersten Medienleitung 24 mit einer zweiten Medienleitung 26, die ausgangsseitig mit dem Abblasekanal 10 verbunden ist. Die erste Medienleitung 24 und die zweite Medienleitung 26 stellen somit in ihrer Gesamtheit eine durch das Hauptsteuermodul 14 freigebbare Entlastungsleitung für den Steuerraum 20 des Sicherheitsventils 4 dar.

Das Hauptsteuermodul 14 ist seinerseits ebenfalls mediengesteuert und dazu über eine dritte Medienleitung 28 mit dem Vorsteuermodul 16 verbunden. Das Vorsteuermodul 16 gibt im Auslösefall eine Verbindung der dritten Medienleitung 28 mit einer geführter Medienleitung 30 frei, die ausgangsseitig in nicht näher dargestellter Weise ebenfalls mit einem Abblasekanal verbunden ist. Die dritte Medienleitung 28 und die mit dieser verbindbare vierte Medienleitung 30 stellen somit in ihrer Gesamtheit ebenfalls eine Entlastungsleitung dar, über die das Hauptsteuermodul 14 druckseitig entlastet werden kann. Infolge einer derartigen Druckentlastung des Hauptsteuermoduls 14 schaltet dieses die erste Medienleitung 24 zur Druckentlastung des Steuerraums 20 des Sicherheitsventils 4 durch.

Zur Auslösung einer Entlastung des Hauptsteuermoduls 14 durch Herstellen einer Verbindung zwischen der dritten Medienleitung 28 und der vierter Medienleitung 30 ist das Vorsteuermodul 16 über den im Druckbehälter 2 herrschenden Druck angesteuert. Dazu ist das Vorsteuermodul 16 über eine als Impulsleitung ausgebildete fünfte Medienleitung 32 mit dem Innenraum des Druckbehälters 2 verbunden. Von der fünften Medienleitung 32 zweigt eine als Auffüllleitung für das Vorsteuermodul 16 ausgestaltete sechste Medienleitung 34 ab.

Hinsichtlich ihrer Wirkungs- und Arbeitsweise sowie insbesondere hinsichtlich ihres medienseitigen Zusammenwirkens sind das Sicherheitsventil 4 und das mit diesem über die Medienleitungen 24, 26, 28, 30, 32, 34 kommunizierende Steuerventil 12 in der in der DE 196 28 610 C1 beschriebenen Bauweise ausgeführt. Die Medienleitungen 24, 26, 28, 30, 32, 34 sind dabei insbesondere als geeignete Bohrungen oder Kanäle ausgeführt. Zur weiteren Erläuterung der Funktionsweise des Sicherheitsventils 4 und des diesem zugeordneten Steuerventils 12 wird auf diese Beschreibung in vollem Umfang verwiesen.
Das Sicherheitsventil 4 und das diesem zugeordnete Steuerventil 12 sind an einem gemeinsamen Absperrblock 40 angeordnet, an dem sie einerseits mechanisch fixiert sind, und in dem andererseits die Medienleitungen 24, 26, 28, 30, 32, 34 geführt sind. In den Absperrblock 40 sind zudem auch Hilfsmittel und Armaturen wie beispielsweise ein von außen betätigbares Absperrventil 42 für die erste Medienleitung 24 oder ein von außen betätigbares Absperrventil 44 für die fünfte Medienleitung 32 integriert. Weiterhin ist durch den Absperrblock 40 auch eine von der ersten Medienleitung 24 abzweigende Stichleitung 46 geführt, die über einen Flansch 48 und eine Leitung 50 mit einem Drucksensor 52 verbunden ist. Über den Drucksensor 52 ist dabei auch während des Betriebs der Ventilanordnung 1 der im Steuerraum 20 des Sicherheitsventils 4 aktuell anliegende Druck erfaßbar. Die im Bereich des Absperrventils 44 aus dem Absperrblock 40 austretende fünfte Medienleitung 32 ist über einen mit dem Absperrblock 40 verbundenen Flansch 54 und eine daran angeschlossene Entnahmeleitung 56 mit dem Druckbehälter 2 verbunden.

Die Ventilanordnung 1 ist, insbesondere aufgrund der Ausgestaltung des Sicherheitsventils 4 und des Steuerventils 12, auch für einen Einsatz über einen vergleichsweise langen Zeitraum hinweg in einer Kernkrattwerksanlage geeignet. Beim Einsatz der Ventilanordnung 1 ist dabei insbesondere vorgesehen, diese auch über eine Anzahl von Brennelement-Zyklen hinaus weiter zu verwenden. Um aber dabei stets die größtmögliche Anlagensicherheit zu gewährleisten, ist während eines turnusgemäßen Brennelementwechsels zwar nicht ein vollständiger Austausch der Ventilanordnung 1, aber zumindest doch eine vollständige Funktionsüberprüfung der Ventilanordnung 1 vorgesehen. Die Ventilanordnung 1 ist daher dafür ausgelegt, eine derartige Funktionsüberprüfung im eingebauten Zustand mit vergleichsweise geringem Aufwand zu ermöglichen.

Dazu ist der Absperrblock 40, in dem die das Sicherheitsventil 4 und das Steuerventil 12 miteinander und mit der Außenwelt verbindenden Medienleitungen 24, 26, 28, 30, 32, 34 geführt sind, zweigeteilt ausgeführt und umfaßt einen als eigentlichen Trägerblock vorgesehenen Hauptblock 60 und einem mit diesem lösbar verbundenen Adapterblock 62. Der Hauptblock 60 ist dabei vergleichsweise massiv ausgeführt und dient ebenfalls als Trägerblock für das Steuerventil 12. Der Adapterblock 62 hingegen ist im Vergleich zum Hauptblock 60 vergleichsweise gering dimensioniert ausgeführt und umfaßt eine Anzahl von die medienseitige Verschaltung der Medienleitungen 24, 26, 28, 30, 32, 34 bestimmenden Steuerkanälen 64.

Im Ausführungsbeispiel gemäß Fig. 1 ist der Adapterblock 62 dabei als Betriebsadapter oder Betriebsflansch ausgeführt, wobei die in ihm geführten Steuerkanäle 64 zur Einstellung einer mediumseitigen Betriebskonfiguration für die Ventilanordnung 1 ausgelegt sind. Dazu ist insbesondere die zweite Mediumleitung 26 über einen der Steuerkanäle 64 durchgängig gehalten. Ebenso ist durch einen der Steuerkanäle 64 die fünfte Medienleitung 32 durchgängig gehalten. Um auf besonders einfache Weise eine medienseitige Umschaltung der Medienleitungen 24, 26, 28, 30, 32, 34 von der Betriebskonfiguration in eine Prüfkonfiguration zu ermöglichen, münden die Medienleitungen 24, 26, 28, 30, 32, 34 im Hauptblock 60 an nach einem vorgebbaren Standard ermittelten Positionen in die Grenzfläche 66 zum Adapterblock 62.

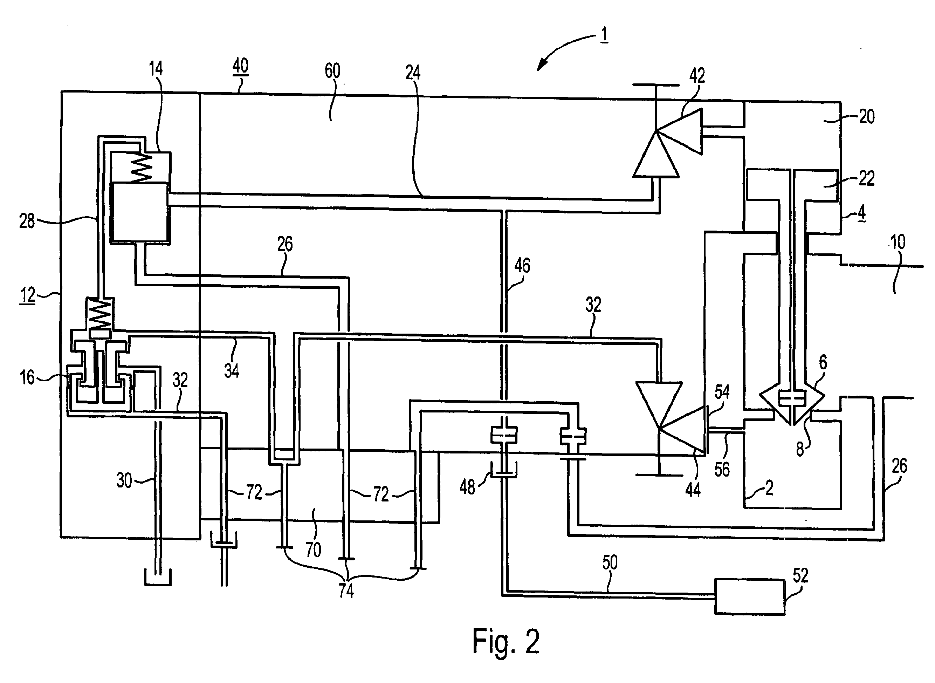

Eine medienseitige Umschaltung der im Ausführungsbeispiel in Fig. 1 dargestellten Betriebskonfiguration in eine im Ausführungsbeispiel gemäß Fig. 2 dargestellte Prüfkonfiguration erfolgt dabei, in dem der zur Einstellung der Betriebskonfiguration ausgelegte Adapterblock 62 ersetzt wird durch einen zur Einstellung der Prüfkonfiguration ausgelegten weiteren Adapterblock 70. Dieser dient somit als Prüfadapter oder Prüfflansch. Zur Funktionsprüfung der Ventilanordnung 1 ist nämlich vorgesehen, im drucklosen Zustand des Druckbehälters 2 eine gezielte Beaufschlagung einzelner aktiver Komponenten der Ventilanordnung 1 wie beispielsweise des Vorsteuermoduls 16 oder des Hauptsteuermoduls 14 mit Prüfdrücken unter Prüfbedingungen vorzunehmen. Um dies auf besonders einfache Weise zu ermöglichen, ist der weitere Adapterblock 70 für eine auf diese Prüfbedingungen abgestimmte medienseitige Verschaltung der Medienleitungen 24, 26, 28, 30, 32, 34 ausgelegt.

Dazu weist der weitere Adapterblock 70 Steuerkanäle 72 auf, die an die nunmehr gewünschte medienseitige Verschaltung angepaßt sind. Insbesondere sind dabei die zweite Medienleitung 26 und die fünfte Medienleitung 32 nicht durchgängig geführt, sondern mit jeweils zwei Halbteilen getrennt zugänglich gemacht. Dazu sind die Steuerkanäle 72, die in geeigneter Weise an der zweiten Medienleitung 26 und an der fünften Medienleitung 32 angeschlossen sind, im wesentlichen gradlinig durch den weiteren Adapterblock 70 hindurchgeführt. Die Steuerkanäle 72 enden ausgangsseitig in Prüfflanschen 74, an die ein zur Durchführung der Prüfung geeignetes Prüfgerät anschließbar ist.

Bei der Ventilanordnung 1 ist eine Umschaltung zwischen Betriebskonfiguration und Prüfkonfiguration auf besonders einfache Weise lediglich durch einen Austausch der Adapterblöcke 62, 70 gegeneinander ermöglicht. Die Umschaltung kann somit mit besonders geringem Bedienaufwand erfolgen, wobei insbesondere auch Verschaltungsfehler bei der Umschaltung - beispielsweise bei vergleichsweise komplex aufgebauter medienseitiger Verschaltung - sicher vermieden sind. Durch den Austausch des Adapterblocks 62 gegen den als Prüfflansch oder Prüfadapter ausgebildeten weiteren Adapterblock 70 ist auf besonders einfache Weise die Einstellprüfung des Steuerventils 12 durchführbar. Im Ausführungsbeispiel ist das Sicherheitsventil 4 zudem nach dem Entlastungsprinzip ausgebildet. Das Konzept nach der Ventilanordnung 1 eignet sich aber auch für ein nach dem Belastungsprinzip ausgeführtes Sicherheitsventil, wobei in diesem Fall über den als Prüfflansch ausgebildeten weiteren Adapterblock 70 auch die Bewegungsprüfung des Sicherheitsventils auf besonders einfache Weise durchführbar ist.

Bezugszeichenliste
- 1: Ventilanordnung
- 2: Druckbehälter
- 4: Sicherheitsventil
- 6: Ventilkegel
- 8: Abblaseöffnung
- 10: Abblaseleitung
- 12: Steuerventil
- 14: Hauptsteuermodul
- 16: Vorsteuermodul
- 20: Steuerraum
- 22: Kolben
- 24, 26, 28, 30, 32, 34: Medienleitungen
- 40: Absperrblock
- 42, 44: Absperrventile
- 46: Stichleitung
- 48: Flansch
- 50: Leitung
- 52: Drucksensor
- 54: Flansch
- 56: Entnahmeleitung
- 60: Hauptblock
- 62: Adapterblock
- 64: Steuerkanäle
- 66: Grenzfläche
- 70: Adapterblock
- 72: Steuerkanäle
- 74: Prüfflansche

## Patentansprüche

1. Ventilanordnung (1) mit einem Absperrblock (40), an dem ein Sicherheitsventil (4) und ein mit diesem über eine Anzahl von im Absperrblock (40) geführten Medienleitungen (24, 26, 28, 30, 32, 34) kommunizierendes Steuerventil (12) angeordnet sind **dadurch gekennzeichnet, daß** der Absperrblock (40) einen Hauptblock (60) und einen mit diesem lösbar verbundenen Adapterblock (64) umfaßt, der eine Anzahl von die medienseitige Verschaltung der Medienleitungen (24, 26, 28, 30, 32, 34) bestimmenden Steuerkanälen (64) aufweist.

2. Ventilanordnung (1) nach Anspruch 1, bei der die Medienleitungen (24, 26, 28, 30, 32, 34) im Hauptblock (60) an nach einem vorgebbaren Standard ermittelten Positionen in die Grenzfläche (66) zum Adapterblock (62) münden.

3. Ventilanordnung (1) nach Anspruch 1 oder 2, bei der die im Adapterblock (62) geführten Steuerkanäle (64) zur Einstellung einer Betriebskonfiguration der Medienleitungen (24, 26, 28, 30, 32, 34) ausgelegt sind.

4. Ventilanordnung (1) nach einem der Ansprüche 1 bis 3, bei der die im Adapterblock (62) geführten Steuerkanäle (64) zur Einstellung einer Prüfkonfiguration der Medienleitungen (24, 26, 28, 30, 32, 34) ausgelegt sind.

5. Ventilanordnung (1) nach einem der Ansprüche 1 bis 4, deren Sicherheitsventil (4) nach dem Entlastungsprinzip ausgeführt ist.

6. Ventilanordnung (1) nach einem der Ansprüche 1 bis 4, deren Sicherheitsventil (4) nach dem Belastungsprinzip ausgeführt ist.

7. Ventilanordnung (1) nach einem der Ansprüche 1 bis 6, bei denen eine im Absperrblock (40) geführte Medienleitung (24, 26, 28, 30, 32, 34) medienseitig mit einem Drucksensor (52) kommuniziert.

## Claims

1. Valve arrangement (1) having a shut-off block (40) on which a safety valve (4) and a control valve (12), which communicates with the safety valve via a number of medium lines (24, 26, 28, 30, 32, 34) which are guided in the shut-off block (40), are arranged, **characterized in that** the shut-off block (40) comprises a main block (60) and an adapter block (62) which is detachably connected to the former and has a number of control channels (64) which determine the medium-side interconnection of the medium lines (24, 26, 28, 30, 32, 34).

2. Valve arrangement (1) according to Claim 1, in which the medium lines (24, 26, 28, 30, 32, 34) in the main block (60) issue into the boundary surface (66) to the adapter block (62) at locations which are determined in accordance with a prespecifiable standard.

3. Valve arrangement (1) according to either Claim 1 or 2, in which the control channels (64) which are guided in the adapter block (62) are designed for setting an operational configuration of the medium lines (24, 26, 28, 30, 32, 34).

4. Valve arrangement (1) according to one of Claims 1 to 3, in which the control channels (64) which are guided in the adapter block (62) are designed for setting a test configuration of the medium lines (24, 26, 28, 30, 32, 34).

5. Valve arrangement (1) according to one of Claims 1 to 4, whose safety valve (4) is designed according to the discharging principle.

6. Valve arrangement (1) according to one of Claims 1 to 4, whose safety valve (4) is designed according to the loading principle.

7. Valve arrangement (1) according to one of Claims 1 to 6, in which a medium line (24, 26, 28, 30, 32, 34) which is guided in the shut-off block (40) communicates with a pressure sensor (52) on the medium-side.

## Revendications

1. Dispositif (1) de soupape comprenant un bloc (40) d'obturation, sur lequel sont disposés une soupape (4) de sécurité et une vanne (12) de commande communiquant avec celle-ci par un certain nombre de conduits (24, 26, 28, 30, 32, 34) pour des fluides passant dans le bloc (40) d'obturation, **caractérisé en ce que** le bloc (40) d'obturation comprend un bloc (60) principal et un bloc (64) d'adaptateur qui y est relié de manière amovible et qui a un certain nombre de canaux (64) de commande déterminant le branchement côté fluide des conduits (24, 26, 28, 30, 32, 34) pour des fluides.

2. Dispositif (1) de soupape suivant la revendication 1, dans lequel les conduits (24, 26, 28, 30, 32, 34) pour des fluides du bloc (60) principal débouchent dans l'interface (66) avec le bloc (62) d'adaptateur en des positions déterminées suivant une norme pouvant être prescrite.

3. Dispositif (1) de soupape suivant la revendication 2, dans lequel les canaux (64) de commande qui passent dans le bloc (62) d'adaptateur sont conçus pour établir une configuration de fonctionnement des conduits (24, 26, 28, 30, 32, 34) pour des fluides.

4. Dispositif (1) de soupape suivant l'une des revendications 1 à 3, dans lequel les canaux (64) de commande qui passent dans le bloc (62) d'adaptateur sont conçus pour régler une configuration de contrôle des conduits (24, 26, 28, 30, 32, 34) pour des fluides.

5. Dispositif (1) de soupape suivant l'une des revendications 1 à 4, dont la soupape (4) de sécurité est réalisée suivant le principe de décharge.

6. Dispositif (1) de soupape suivant l'une des revendications 1 à 4, dont la soupape (4) de sécurité est réalisée suivant le principe de décharge.

7. Dispositif (1) de soupape suivant l'une des revendications 1 à 6, dans lequel un conduit (24, 26, 28, 30, 32, 34) passant dans le bloc (40) d'obturation communique du côté fluide avec un capteur (52) de pression.
